(19) Europäisches Patentamt
European Patent Office
Office européen des brevets

(11) Veröffentlichungsnummer: **0 135 866**
**B1**

(12) **EUROPÄISCHE PATENTSCHRIFT**

(45) Veröffentlichungstag der Patentschrift: **03.05.89**

(51) Int. Cl.⁴: **C 08 L 55/02**, C 08 L 25/12, C 08 L 51/04

(21) Anmeldenummer: **84110551.3**

(22) Anmeldetag: **05.09.84**

(54) **ABS-Formmassen mit verbesserter Flammwidrigkeit.**

(30) Priorität: **17.09.83 DE 3333722**

(43) Veröffentlichungstag der Anmeldung: **03.04.85 Patentblatt 85/14**

(45) Bekanntmachung des Hinweises auf die Patenterteilung: **03.05.89 Patentblatt 89/18**

(84) Benannte Vertragsstaaten: **DE FR GB IT NL**

(56) Entgegenhaltungen: **DE-A- 3 149 797**

(73) Patentinhaber: **BAYER AG, Konzernverwaltung RP Patentabteilung, D-5090 Leverkusen 1 Bayerwerk (DE)**

(72) Erfinder: **Zabrocki, Karl, Dr., Edelfalter 33, D-4044 Büttgen (DE)**
Erfinder: **Lindner, Christian, Dr., Riehler Strasse 200, D-5000 Köln 60 (DE)**
Erfinder: **Müller, Friedemann, Dr., Am Steinacker 5, D-4040 Neuss 21 (DE)**
Erfinder: **Döring, Joachim, Dr., Sileslusstrasse 78, D-5000 Köln 80 (DE)**

**EP 0 135 866 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ABS-Formmassen auf Basis spezieller Copolymerisate und Pfropfpolymerisate aus olefinisch ungesättigten Monomeren und zur Copolymerisation befähigten Acetylacetatderivaten, die in ihrer Flammwidrigkeit gegenüber bekannten ABS-Materialien verbessert sind.

ABS-Formmassen sind Zweiphasenkunststoffe aus

I. einem oder mehreren thermoplastischen Copolymerisaten aus Styrol und Acrylnitril, in dem das Styrol ganz oder teilweise durch andere Monomere ersetzt werden kann, das die äußere Phase bildet und

II. mindestens einem Pfropfpolymerisat mit kautschukartiger Pfropfgrundlage, das die disperse Phase bildet.

ABS-Formmassen sind Ausgangsmaterialien zur Herstellung von Formteilen.

Ein Nachteil dieser Materialien ist ihre ungenügende Flammwidrigkeit, die die Anwendung für feuergefährdete, insbesondere thermisch beanspruchte Teile, z. B. Gehäuse für Phono- und Fernsehgeräte, stark einschränkt. Zur Erhöhung der Flammwidrigkeit von ABS-Materialien kann man anorganische Oxide z. B. $Sb_2O_3$ und/oder halogenhaltige Additive, z. B. Octabromdiphenylether verwenden. Diese Additive sind jedoch erst bei Anteilen zwischen 10 und 30 Gew.-% wirksam, wodurch die mechanische Festigkeit des Teils stark beeinträchtigt wird.

Es wurde nun gefunden, daß man die Entflammbarkeit von ABS-Formmassen durch Copolymerisation mit speziellen Monomeren wesentlich reduzieren kann. Durch diese Maßnahme kann ganz oder teilweise auf den Zusatz flammhemmender Additive verzichtet werden.

Gegenstand der vorliegenden Erfindung sind daher ABS-Formmassen, die aus

I. 90–30 Gew.-% eines oder mehrerer thermoplastischer Copolymerisate aus

Ia) 50–80 Gew.-% Styrol, α-Methylstyrol, kernalkylierten Styrolen, Halogenstyrolen, Maleinsäureanhydrid, N-substituiertem oder unsubstituiertem Maleinimid, Methylmethacrylat, Inden oder Mischungen aus zwei oder mehreren dieser Monomeren,

Ib) 35–15 Gew.-% Acrylnitril und/oder Methacrylnitril, und

Ic) 20–0,2 Gew.-% mindestens einer weiteren copolymerisierbaren Verbindung und

II. 10–70 Gew.-% eines oder mehrerer Pfropfpolymerisate, erhältlich durch Polymerisation der unter Ia und/oder Ib und/oder Ic genannten Monomeren in Gegenwart von mindestens einem Kautschukpolymeren, wobei sich die Gew.-% zu I und II auf die Summe aus I und II beziehen, und

III. gegebenenfalls üblichen Additiven

bestehen und dadurch gekennzeichnet sind, daß die weitere copolymerisierbare Verbindung Ic den Formeln

$$CH_3-CO-CH_2-COOR_1-OO\overset{\overset{R_2}{|}}{C}=CH_2 \text{ oder}$$

$$CH_3-CO-CH_2COOR_3-\overset{\overset{R_4}{|}}{C}=CH_2$$

entspricht, worin

$R_1$ $C_2$–$C_6$-Alkylen,

$R_2$ Wasserstoff oder Methyl,

$R_3$ eine direkte Bindung oder $C_1$–$C_4$-Alkylen und

$R_4$ Wasserstoff, Methyl oder $CH_2-OOC-CH_2-CO-CH_3$ bedeuten, und die Gesamtmenge an Verbindung Ic) 25 Gew.-%, bezogen auf Formmasse, nicht überschreitet.

Bevorzugte Monomere Ia sind Styrol, α-Methylstyrol und p-Methylstyrol.

Die Monomeren Ic) sind bekannt und werden z. B. durch Umsetzung entsprechender OH-Verbindungen mit Diketen oder durch Umesterung von Acetylacetaten mit ensprechenden OH-Verbindungen hergestellt.

Bevorzugte Verbindungen Ic) sind Umsetzungsprodukte des Diketens mit OH-haltigen Acrylestern, z. B. mit Hydroxyethylacrylat, Hydroxypropylacrylat, Hydroxyethylmethacrylat und Hydroxypropylmethacrylat.

Bevorzugt werden 60 bis 75 Gew.-% Ia), 32 bis 20 Gew.-% Ib) und 15 bis 3 Gew.-% Ic) copolymerisiert.

Höhere Anteile von Ic) als 25 Gew.-% führen in der Regel zu einem Abfall der Produktzähigkeit, während niedrigere Anteile als 0,2% für den Flammschutz unwirksam sind.

Als Kautschukpolymere kommen z. B. Polybutadien, SBR, NBR und Polybutylacrylat in Frage; Polybutadien und SBR sind bevorzugt.

Das Gewichtsverhältnis der polymerisierten Monomeren zum Kautschuk im Pfropfpolymerisat II liegt bei 95 : 5 bis 10 : 90, vorzugsweise 60 : 40 bis 30 : 70.

Insbesondere werden als Monomere Styrol und Arylnitril eingesetzt, vorzugsweise im Gewichtsverhältnis 60 : 40 bis 80 : 20.

Für die Herstellung der Harzpolymerisate I wie auch der Pfropfpolymerisate II kommen alle üblichen Polymerisationstechniken wie Massepolymerisation, Lösungspolymerisation oder Emulsionspolymerisation in Betracht (Ullmanns Encyclopädie der technischen Chemie, Band 19, Seite 277 bis 95; Verlag Chemie, Weinheim 1980).

Bevorzugt sind die Massepolymerisation und die Emulsionspolymerisation.

Die Harze I sind im allgemeinen in organischen Lösemitteln gut löslich und besitzen durchschnittliche Molgewichte von $6 \cdot 10^3$ bis $10^6$, vorzugsweise $10^4$ bis $2 \cdot 10^5$ (Zahlenmittel $M_n$).

Die Pfropfpolymerisate II sind nur teilweise löslich. Sie weisen bevorzugt Pfropfgrade G gemäß der in der DE-AS-2 420 358 gegebenen Definition von 0,3 bis 1,0 auf.

Die Abmischung der Harzpolymerisate I mit den Pfropfpolymerisaten II kann entweder in «nassem» Zustand, d. h. als Lösung. Aufschlämmung oder Emulsion oder in «trockenem» Zustand, d. h. als Pulver, Granulat oder Schmelze erfolgen, wobei sich im letzteren Fall eine für Thermoplaste übliche Durchmischung in Knetern, Schneckenmaschinen, Walzenstühlen oder anderen für die Thermoplastverarbeitung üblichen Maschinen anschließt.

Übliche Additive, wie Stabilisatoren, Gleitmittel, Antistatika, Füllstoffe und Pigmente können zugesetzt werden.

Die Verarbeitung der Formmassen geschieht z. B. durch Granulierung, Spritzguß, Extrusion, Kalandrierung, Pressung oder Blasverformung.

Die erfindungsgemäßen ABS-Formmassen zeichnen sich durch wesentlich verbesserte Flammwidrigkeit bei gleichzeitig guten mechanischen Eigenschaften und guter Wärmeformbeständigkeit aus.

Herstellung der Harzpolymerisate

In eine Vorlage aus a kg Wasser, b g des Emulgators c gab man nach sorgfältigem Spülen mit Stickstoff bei 65 °C eine Lösung von d g $K_2S_2O_8$ in Wasser, sowie 150 g des Monomergemisches. Nach Anspringen der Polymerisation wurde über 4 Stunden bei 65–70 °C der Rest des Monomergemisches sowie eine wäßrige Lösung von e g Emulgator c dosiert; das gesamte Monomergemisch umfaßte 3 kg, die Angaben dazu sind Gew.-%. Anschließend wurde weitere 4 Stunden bei 65 bis 70 °C gerührt.

Als Komponente Ic) wurde die Verbindung der Formel

$$CH_3-CO-CH_2-COO-CH_2-CH_2-OOC-\overset{\overset{CH_3}{|}}{C}=CH_2$$

eingesetzt.

Tabelle 1

| Harzpolymere | a | b | c | d | e | Zusammensetzung der Monomermischung | | | | |
|---|---|---|---|---|---|---|---|---|---|---|
| | | | | | | Styrol | Methylstyrol | Acrylnitril | Ic | tert.–* DDM (g) |
| A | 2,85 | 2,4 | alkalisch eingest. Harzseife | 9 | 57 | 72 | – | 18 | – | 12 |
| B | 3,73 | 3,0 | Alkysulfonat | 9 | 72 | – | 69 | 31 | – | 15,6 |
| C | ← wie A → | | | | | 62 | – | 28 | 10 | 12 |
| D | ← wie B → | | | | | – | 59 | 31 | 10 | 15,6 |

*) tert.-Dodecylmercaptan als Regler

Herstellung der Pfropfpolymerisate

In eine Vorlage gab man einen Polybutadienlatex mit 1,5 kg Feststoff und einem mittleren Teilchendurchmesser von 0,4 µ, verdünnte auf 20 Gew.-% Feststoff, heizte unter Spülen mit $N_2$ auf 65 °C auf, gab 15 g $K_2S_2O_8$ in Wasser gelöst zu und dosierte anschließend über 4 Stunden 1,5 kg Monomergemisch sowie eine alkalisch eingestellte Lösung von 60 g Alkylsulfonat-Emulgator zu. Man ließ weitere 4 Stunden bei 65–70 °C reagieren. Die Komponente Ic) war die gleiche wie bei der Herstellung des Harzes.

Tabelle 2

| Pfropfpolymere | Styrol | Zusammensetzung des Monomergemisches (g) Acrylnitril | Ic |
|---|---|---|---|
| E | 1080 | 420 | – |
| F | 972 | 378 | 150 |
| G | 918 | 357 | 225 |

Die Harze und Pfropfpolymerisate wurden nach Zugabe eines Stabilisators separat durch Salzzusatz gefällt, gewaschen, getrocknet und nach folgender Rezeptur auf einem Kneter abgemischt:

2 kg Pfropfpolymerisat
3 kg Harzpolymerisat
0,1 kg Ethylendiaminbistearoylamid-Gleitmittel
0,01 kg Siliconöl.

Die Materialien wurden nach Walzen zu Prüfkörpern abgespritzt und ihre Brenngeschwindigkeit nach VDE 0860 HF sowie ihre Wärmeformbeständigkeit nach Vicat B gemessen.

Tabelle 3 faßt die Vergleichsversuche und Beispiele zusammen.

Tabelle 3

| | Harz | Pfropf-polymerisat | Brenngeschwin-digkeit (mm/min) | Vicat B (°C) |
|---|---|---|---|---|
| Beispiel 1 | D | E | 44 | 102 |
| Beispiel 2 | C | F | 38 | 102 |
| Beispiel 3 | C | G | 45 | 98 |
| Vergleichs-beispiel 1 | A | E | 50 | 99 |
| Vergleichs-beispiel 2 | B | E | 47 | 95 |

**Patentansprüche**

1. ABS-Formmassen bestehend aus

I. 90–30 Gew.-% eines oder mehrerer thermoplastischer Copolymerisate aus
Ia) 50–80 Gew.-% Styrol, α-Methylstyrol, kernalkylierten Styrolen, Halogenstyrolen, Maleinsäureanhydrid, N-substituiertem oder unsubstituiertem Maleinimid, Methylmethacrylat, Inden oder Mischungen aus zwei oder mehreren dieser Monomeren,
Ib) 35–15 Gew.-% Acrylnitril und/oder Methacrylnitril,
Ic) 20–0,2 Gew.-% mindestens einer weiteren copolymerisierbaren Verbindung und

II. 10–70 Gew.-% eines oder mehrerer Pfropfpolymerisate, erhältlich durch Polymerisation der unter Ia), Ib) und/oder Ic) genannten Monomeren in Gegenwart von mindestens einem Kautschukpolymeren, und

III. gegebenenfalls üblichen Additiven, wobei sich die Gew.-% zu I und II auf die Summe aus I und II beziehen,

dadurch gekennzeichnet, daß die weitere copolymerisierbare Verbindung Ic) den Formeln

$$CH_3{-}CO{-}CH_2{-}COOR_1{-}OOC(R_2){=}CH_2$$

oder

$$CH_3{-}CO{-}CH_2COOR_3{-}C(R_4){=}CH_2$$

entspricht, worin
$R_1$ $C_2$–$C_6$-Alkylen,
$R_2$ Wasserstoff oder Methyl,
$R_3$ eine direkte Bindung oder $C_1$–$C_4$-Alkylen und
$R_4$ Wasserstoff, Methyl oder $CH_2{-}OOC{-}CH_2{-}CO{-}CH_3$ bedeuten, und die Gesamtmenge an Ic) 25 Gew.-%, bezogen auf Formmasse, nicht überschreitet.

2. ABS-Formmassen gemäß Anspruch 1, dadurch gekennzeichnet, daß das thermoplastische Copolymerisat I aus 60 bis 75 Gew.-% Ia), 32 bis 20 Gew.-% Ib) und 15 bis 3 Gew.-% Ic) besteht.

3. ABS-Formmassen gemäß Anspruch 1, dadurch gekennzeichnet, daß als Verbindung Ic) ein Umsetzungsprodukt aus Diketen und Hydroxyethyl(meth)acrylat oder Hydroxypropyl(meth)acrylat verwendet wird.

**Claims**

1. ABS moulding compounds consisting of

I. 90 to 30% by weight of one or more thermoplastic copolymers of
Ia) 50 to 80% by weight styrene, α-methyl styrene, nucleus-alkylated styrenes, halogen styrenes, maleic anhydride, N-substituted maleic imide, methyl methacrylate, indene or mixtures of two or more of these monomers,
Ib) 35 to 15% by weight acrylonitrile and/or methacrylonitrile,
Ic) 20 to 0.2% by weight of at least one other copolymerisable compound and

II. 10 to 70% by weight of one or more graft polymers obtainable by polymerization of the monomers mentioned under Ia), Ib) or Ic) in the presence of at least one rubber polymer and

III. optionally standard additives, the percentages by weight of I and II being based on the sum of I and II,

characterized in that the other copolymerizable compound Ic) corresponds to the formulae

$$CH_3{-}CO{-}CH_2{-}COOR_1{-}OOC(R_2){=}CH_2$$

or

$$CH_3{-}CO{-}CH_2COOR_3{-}C(R_4){=}CH_2$$

in which
$R_1$ represents $C_2$–$C_6$ alkylene,
$R_2$ represents hydrogen or methyl,
$R_3$ is a direct bond or $C_1$–$C_4$ alkylene and
$R_4$ represents hydrogen, methyl or $CH_2{-}OOC{-}$

$CH_2$–CO–$CH_3$ and the total quantity of Ic) does not exceed 25% by weight, based on the moulding compound.

2. ABS moulding compounds as claimed in claim 1, characterized in that the thermoplastic copolymer I consists of 60 to 75% by weight Ia), 32 to 20% by weight Ib) and 15 to 3% by weight Ic).

3. ABS moulding compounds as claimed in claim 1, characterized in that a reaction product of diketene and hydroxyethyl (meth)acrylate or hydroxypropyl (meth)acrylate is used as compound Ic).

**Revendications**

1. Mélanges ABS à mouler, constitués de

I. 90 à 30% en poids d'un ou plusieurs copolymérisats thermoplastiques formés de:

Ia) 50 à 80% en poids de styrène, d'α-méthylstyrène, de styrènes alkylés sur le noyau, de styrènes halogénés, d'anhydride d'acide maléique, de maléimide substitué ou non substitué sur l'azote, de méthacrylate de méthyle, d'indène ou de mélanges de deux ou plus de deux de ces monomères,

Ib) 35 à 15% en poids d'acrylonitrile et/ou de méthacrylonitrile,

Ic) 20 à 0,2% en poids d'au moins un autre composé copolymérisable et

II. 10–70% en poids d'un ou plusieurs polymérisats greffés, obtenus par polymérisation des monomères mentionnés en Ia), Ib) et/ou Ic) en présence d'au moins un polymère du type caoutchouc, et

III. le cas échéant, des additifs classiques, les pourcentages en poids de I et II se rapportant à la somme de I et II,

caractérisé en ce que l'autre composé Ic) copolymérisable répond aux formules:

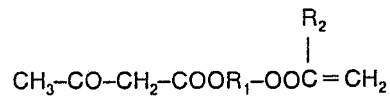

ou

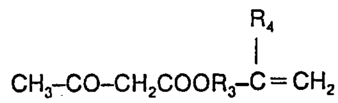

dans lesquelles

$R_1$ est un groupe alkylène en $C_2$ à $C_6$,

$R_2$ est l'hydrogène ou le groupe méthyle,

$R_3$ est une liaison simple ou un groupe alkylène en $C_1$ à $C_4$ et

$R_4$ est l'hydrogène, le groupe méthyle ou un groupe $CH_2$–OOC–$CH_2$–CO–$CH_3$ et la quantité totale de Ic), par rapport au mélange à mouler, ne dépasse pas 25% en poids.

2. Mélanges ABS à mouler suivant la revendication 1, caractérisés en ce que le copolymérisat thermoplastique I est constitué de 60 à 75% en poids de Ia), de 32 à 20% en poids de Ib) et de 15 à 3% en poids de Ic).

3. Mélanges ABS à mouler suivant la revendication 1, caractérisés en ce qu'on utilise comme composé Ic) un produit de réaction du dicétène et du (méth)acrylate d'hydroxyéthyle ou du (méth)acrylate d'hydroxypropyle.